# EUROPÄISCHE PATENTSCHRIFT

(11) **EP 2 361 174 B1**
(45) Veröffentlichungstag und Bekanntmachung des Hinweises auf die Patenterteilung: **05.11.2014**
(21) Anmeldenummer: 09801160.4
(22) Anmeldetag: 15.12.2009
(51) Int. Cl.: B29B 9/06, B29B 9/16

(54) **VERFAHREN ZUM GRANULIEREN VON KUNSTSTOFF MIT HOHER EINWEICHUNGSTEMPERATUR**
METHOD FOR GRANULATING PLASTIC HAVING A HIGH SOFTENING TEMPERATURE
PROCÉDÉ DE GRANULATION DE MATIÈRE PLASTIQUE AYANT UNE TEMPÉRATURE ÉLEVÉE DE RAMOLLISSEMENT

(30) Priorität: 16.12.2008 DE 102008062480
(43) Veröffentlichungstag der Anmeldung: 31.08.2011
(73) Patentinhaber: Automatik Plastics Machinery GmbH, 63762 Grossostheim (DE)
(72) Erfinder: GLÖCKNER, Frank, 63739 Aschaffenburg (DE)
(74) Vertreter: Puschmann Borchert Bardehle Patentanwälte Partnerschaft mbB
(86) Internationale Anmeldenummer: PCT/EP2009/008996
(87) Internationale Veröffentlichungsnummer: WO 2010/072361

(56) Entgegenhaltungen:
- WO-A1-2007/104536
- DE-A1-102007 012 450
- US-A1- 2005 154 183

## Beschreibung

Die Erfindung bezieht sich auf ein Verfahren zum Granulieren von Kunststoff mit hoher Erweichungstemperatur von über 120° C, an einer Lochplatte zur Erzeugung von Strängen aus flüssigem Kunststoff und einer anschließenden, ein Prozessfluid enthaltenden Prozesskammer mit einer Zerteilvorrichtung, aus der ein Gemisch von Prozessfluid und Granulat unter Abkühlung des Granulats in einer Kühlstrecke abgeleitet wird. Derartige Kunststoffe sind z.B. Polycarbonat, Polycarbonatblend, Polystyrol oder ein Hochtemperatur-Thermoplast.

Das Granulieren von thermoplastisch verarbeitbaren Polymeren wird in der WO 2004/080679 A1 beschrieben, die den Oberbegriff der Ansprüche 1 und 2 offenbart. Um beim Granulieren dieser Kunststoffe ein Granulat mit weniger als 10% konkaven Stellen zu erzeugen, das im Übrigen an jeder anderen Stelle konvex ist, wird in der Druckschrift angegeben, dass die betreffende Polymerschmelze mit einer Zerteilvorrichtung zu Granulat zerteilt wird, wonach das Granulat mit dem Prozessfluid als Gemisch in einem flüssigen Kühlmittel mit einer Temperatur im Bereich von 60 bis 130° C abgekühlt wird.

In der WO 2004/033174 A1 wird ein Verfahren zum Granulieren von polymeren Kunststoffen beschrieben, bei dem die Granulation in einem Flüssigkeitsbad von über 100° C durchgeführt wird, wonach unmittelbar nach Durchführung der Granulation des Granulat in einem Flüssigkeitsbad, vorzugsweise Wasserbad mit einer Temperatur von über 100° C in einem druckgefäßartigen Gehäuse behandelt wird.

Es wird weiterhin auf die US 200510154183 A1 und die WO 2007/104536 A1 hingewiesen, die sich beide mit dem Granulieren von Polyester befassen, also einem Kunststoff, der eine relativ niedrige Erweichungstemperatur besitzt und daher nur entsprechend niedrigen Temperaturen in irgendwelchen Behandlungsverfahren auszusetzen ist.

Bei der Erfindung handelt es sich um ein Verfahren zum Granulieren von Kunststoff mit hoher Erweichungstemperatur von über 120° C, das so gestaltet ist, dass das erzeugte Granulat weitgehend frei von Vakuolen ist.

Gemäß einem ersten Aspekt der Erfindung geschieht dies dadurch, dass die Prozesskammer mit einem Prozessfluid mit einer Temperatur von > 120°C und einem Druck von > 2 bar befüllt ist und das Gemisch aus Prozessfluid, insbesondere Wasser, und Granulat unter Aufrechterhaltung des Drucks beim Durchlaufen der Kühlstrecke danach in eine Trennvorrichtung geleitet wird, in der das Granulat nach vorheriger Leitung über eine Druckschleuse (10) zur Absenkung auf Umgebungsdruck vom Prozessfluid getrennt und ausgetragen wird.

Gemäß einem anderen Aspekt der Erfindung geschieht dies dadurch, dass die Prozesskammer mit einem Prozessfluid, insbesondere Wasser, mit einer Temperatur von > 120°C und einem Druck von > 2 bar befüllt ist und das Gemisch aus Prozessfluid und Granulat unter Aufrechterhaltung des Drucks beim Durchlaufen der Kühlstrecke in der Trennvorrichtung unter Druck das Granulat vom Prozessfluid getrennt und das Granulat danach über eine Druckschleuse geleitet wird.

Bei diesen Granulierverfahren wird für das Prozessfluid jeweils bewusst die Kombination einer relativ hohen Temperatur bei einem hohen Druck verwendet, nämlich einer Temperatur von > 120° C und einem Druck von > 2 bar. Aufgrund der relativ hohen Temperatur von > 120° C lassen sich mit diesem Verfahren Kunststoffe mit hoher Erweichungstemperatur granulieren und dabei gleichzeitig aufgrund der Anwendung eines relativ hohen Druckes von > 2 bar das Entstehen von Vakuolen praktisch vollständig unterdrücken, wobei insbesondere der Druck in der Kühlstrecke wirkt.

Im Anschluss an die Kühlstrecke kann dann das gekühlte Granulat, insbesondere unter Druck, vom Prozessfluid getrennt und ausgetragen werden. Hierzu dient die der Kühlstrecke folgende Trennvorrichtung.Wenn das Granulat unter Druck vom Prozessfluid getrennt wird, kann es danach über eine Druckschleuse zur Absenkung auf Umgehungsdruck geleitet werden, wonach es zur Weiterverarbeitung zur Verfügung steht.

Wenn die Trennung nicht unter Druck erfolgt, ist es möglich, die insbesondere dem Prozessfluid innewohnende Wärmeenergie durch einen Wärmetauscher zurückzugewinnen, was vorteilhaft dadurch geschieht, dass das Gemisch aus Prozessfluid und Granulat nach Durchlaufen der Kühlstrecke durch einen Wärmetauscher unter Wärmerückgewinnung, danach über die Druckschleuse in die Trennvorrichtung mit einer unter der Siedetemperatur des Prozessfluids liegenden Temperatur geleitet wird, von der einerseits das Granulat abgegeben und andererseits das Prozessfluid über den Wäremtauscher zur Prozesskammer zurückgeführt wird.

Die Zerteilvorrichtung gestaltet man zweckmäßig nach Art eines Unterwassergranulators, dem über eine Lochplatte die heißen Kunststoffstränge zugeführt werden, die dann bei ihrem Austreten aus der Lochplatte durch einen die Lochplatte überstreichenden Messerrotor zu Granulat zerschnitten werden.

In den Figuren sind Ausführungsbeispiele der Erfindung dargestellt. Er zeigen:
- Fig. 1: die Gestaltung für ein Verfahren, bei dem das Gemisch aus Prozessfluid und Granulat nach Durchlaufen der Kühlstrecke in der Trennvorrichtung unter Druck getrennt wird;
- Fig. 2: eine Gestaltung des Verfahrens, bei dem das Gemisch aus Prozessfluid und Granulat unter Wärmerückgewinnung über die Druckschleuse in die Trennvor-richtung geleitet wird.

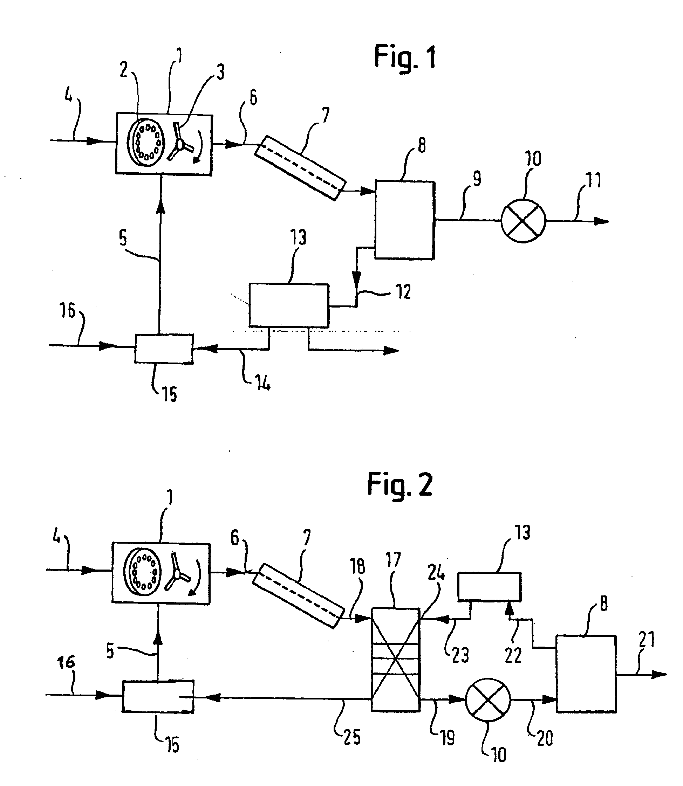

In der Figur 1 ist eine besondere Ausführungsform des erfindungsgemäßen Verfahrens dargestellt, in der die Prozesskammer 1 durch einen an sich bekannten Unterwassergranulator gebildet wird, der in üblicher Weise durch eine Lochplatte 2 und einen Messerrotor 3 gebildet wird, der mit seinen Messern die Lochplatte 2 überstreicht und dabei aus der Lochplatte 2 austretende Kunststoffstränge, die als flüssiger Kunststoff über die Zuleitung 4 der Prozesskammer 1 zugeführt werden, zu Granulat zerschneidet. Dieser Schneidvorgang findet in der Prozesskammer 1 in bekannter Weise unter Zuhilfenahme eines der Prozesskammer 1 zugeführten Prozessfluids statt, das über die Zuführung 5 in den Innenraum der Prozesskammer 1 eingedrückt wird. Bei dem Prozessfluid handelt es sich insbesondere um Wasser, das den Innenraum der Prozesskammer 1 mit einer Temperatur von über 120° C mit einem Druck von über 2 bar füllt.

Das in der Prozesskammer 1 erzeugte Granulat wird dann in einem Gemisch aus Prozessfluid und Granulat über die Zuleitung 6 der Kühlstrecke 7 zugeführt, in der unter Aufrechterhaltung des Druckes dem Granulat soviel Wärme entzogen wird, dass sich in der folgenden Trennvorrichtung 8 das Granulat von dem Prozessfluid trennen lässt. Das Granulat wird über die Zuleitung 9 der insbesondere als Zellradschleuse ausgebildeten Druckschleuse 10 zugeführt, die das zugeführte Material auf Umgebungsdruck zurückversetzt, so dass dieses über den Ausgang 11 als weiterverarbeitbares Granulat abgegeben wird.

Das von der Trennvorrichtung 8 abgetrennte Prozessfluid wird über die Zuleitung 12 der Filter- und Pumpeneinheit 13 zugeführt, das das Prozessfluid von Feinteilen trennt und den Systemdruck auf >2 bar einstellt. Das Prozessfluid wird über die Zuleitung 14 in die Temperatur-Einstelleinheit 15 transportiert, wo mittels des Energiestroms 16 (Erwärmung oder Abkühlung) die Temperatur von > 120° C eingestellt wird. Das aus der Temperatur-Einstelleinheit 15 austretende Prozessfluid wird mit vorgegebenem Druck und Temperatur über die Zuleitung 5 der Prozesskammer 1 zugeführt.

Eine weitere in der Figur 2 dargestellte Gestaltung für die Durchführung des erfindungsgemäßen Verfahrens enthält zur Wärmerückgewinnung einen Wärmeaustauscher 17, der folgendermaßen in die Gesamtgestaltung eingefügt ist:

Die Zuführung von flüssigem Kunststoff über die Zuleitung 4 und die Arbeitsweise der Prozesskammer 1 ist die gleiche wie oben im Zusammenhang in Figur 1 dargestellt, so dass diesbezüglich auf die Erläuterungen zu Figur 1 verwiesen werden kann. Wie bei der Gestaltung gemäß Figur 1 wird dann das Gemisch aus Prozessfluid und Granulat über die Kühlstrecke 7 weitergeleitet, und zwar in den Wärmeaustauscher 17, der in der Figur 2 lediglich symbolisch dargestellt ist, insbesondere durch eine bekannte Wärmepumpe realisiert werden kann. Der Wärmeaustauscher 17 erhält das Gemisch über die Zuleitung 18 und gibt dieses an seinem Ausgang 19 ab, und zwar mit niedriger Temperatur, wobei die Wärme, wie nachstehend dargestellt, anderweitig verwertet wird. Das am Ausgang 19 abgegebene Gemisch durchläuft dann die Druckschleuse 10, die an ihrem Ausgang das nunmehr unter Umgebungsdruck stehende, abgekühlte Gemisch abgibt und über die Zuleitung 20 der Trennvorrichtung 8 zuführt. Die Trennvorrichtung 8 gibt in ihrem Ausgang 21 das reine Granulat unter Umgebungsdruck und mit abgesenkter Temperatur zur Weiterverarbeitung ab. Das abgetrennte Prozessfluid gelangt über die Zuleitung 22 von der Trennvorrichtung 8 her zu der Filter- und Pumpeneinheit 13, die gereinigtes Prozessfluid über die Zuleitung 23 dem Eingang 24 des Wärmetauschers 17 zuführt, der das Prozessfluid durch den Wärmetauscher 17 hindurch leitet, das dabei die dort gespeicherte Wärme aufnimmt und erwärmt am Ausgang 25 des Wärmetauschers 17 zur Weiterverwendung abgibt, indem es ähnlich wie in Figur 1 dargestellt, der Temperatur-Einstellheit 15 zuführt, das dann dafür sorgt, dass heißes und unter Druck stehendes Prozessfluid der Prozesskammer 1 über die Zuleitung 5 zugeführt wird.

## Patentansprüche

1. Verfahren zum Granulieren von Kunststoff mit hoher Erweichungstemperatur von über 120°C, z.B. Polycarbonat, Polycarbonatblend, Polystyrol, Hochtemperatur-Thermoplaste, an einer Lochplatte (2) zur Erzeugung von Strängen aus flüssigem Kunststoff und einer anschließenden, ein Prozessfluid enthaltenden Prozesskammer (1) mit einer Zerteilvorrichtung (3), aus der ein Gemisch von Prozessfluid und Granulat unter Abkühlung des Granulats in einer Kühlstrecke (7) abgeleitet wird, **dadurch gekennzeichnet, dass** die Prozesskammer (1) mit einem Prozessfluid mit einer Temperatur von > 120°C und einem Druck von > 2 bar befüllt ist und das Gemisch aus Prozessfluid und Granulat unter Aufrechterhaltung des Drucks beim Durchlaufen der Kühlstrecke (7) danach in eine Trennvorrichtung (8) geleitet wird, in der das Granulat nach vorheriger Leitung über eine Druckschleuse (10) zur Absenkung auf Umgebungsdruck vom Prozessfluid getrennt und ausgetragen wird.

2. Verfahren zum Granulieren von Kunststoff mit hoher Erweichungstemperatur von über 120°C, z.B. Polycarbonat, Polycarbonatblend, Polystyrol, Hochtemperatur-Thermoplaste, an einer Lochplatte (2) zur Erzeugung von Strängen aus flüssigem Kunststoff und einer anschließenden, ein Prozessfluid enthaltenden Prozesskammer (1) mit einer Zerteilvorrichtung (3), aus der ein Gemisch von Prozessfluid und Granulat unter Abkühlung des Granulats in einer Kühlstrecke (7) abgeleitet wird, **dadurch gekennzeichnet, dass** die Prozesskammer (1) mit einem Prozessfluid mit einer Temperatur von > 120°C und einem Druck von > 2 bar befüllt ist und das Gemisch aus Prozessfluid und Granulat unter Aufrechterhaltung des Drucks beim Durchlaufen der Kühlstrecke (7) in der Trennvorrichtung (8) unter Druck vom Prozessfluid getrennt und das Granulat danach über eine Druckschleuse (10) geleitet wird.

3. Verfahren,nach Anspruch 1, **dadurch gekennzeichnet, dass** das Gemisch aus Prozessfluid und Granulat nach Durchlaufen der Kühlstrecke (7) durch einen Wärmetauscher (17) unter Wärmerückgewinnung über die Druckschleuse (10) in die Trennvorrichtung (8) mit einer unter der Siedetemperatur des Prozessfluids liegenden Temperatur geleitet wird, von der einerseits das Granulat abgegeben und andererseits das Prozessfluid über den Wärmetauscher (17) zur Prozesskammer (1) zurückgeführt wird.

4. Verfahren nach Anspruch 3, **dadurch gekennzeichnet, dass** die Energierückgewinnung über eine Wärmepumpe erfolgt.

5. Verfahren nach einem der Ansprüche 1 bis 4, **dadurch gekennzeichnet, dass** als Zerteilvorrichtung ein Unterwassergranulator eingesetzt wird.

## Claims

1. A method for granulating plastics having a high softening temperature of above 120°C, for example polycarbonate, polycarbonate blends, polystyrene, high-temperature thermoplastics, using a perforated board (2) for generating liquid plastic strands, and a subsequent process chamber (1) which contains a process fluid and includes a cutting device (3) from which a mixture of process fluid and granules is discharged, with the granules being cooled down in a cooling zone (7) **characterized in that** said process chamber (1) can be filled with a process fluid at a temperature of above 120°C and at a pressure of above 2 bar, and that said mixture of process fluid and granules, after passing said cooling zone (7) in which the pressure is maintained, is then directed into a separating means (8) in which the granules, after having passed a pressure lock (10) for pressure reduction to ambient pressure, are then separated from the process fluid and discharged.

2. The method for granulating plastics having a high softening temperature of above 120°C, for example polycarbonate, polycarbonate blends, polystyrene, high-temperature thermoplastics, using a perforated board (2) for generating liquid plastic strands, and a subsequent process chamber (1) which contains a process fluid and includes a cutting device (3) from which a mixture of process fluid and granules is discharged, with the granules being cooled down in a cooling zone (7) **characterized in that** said process chamber (1) can be filled with a process fluid of a temperature of above 120°C and a pressure of above 2 bar and that said mixture of process fluid and granules is first made to pass through said cooling zone (7) in which the pressure is maintained and is then pressurized within said separating means (8) so as to separate the granules from the process fluid, which granules are subsequently fed through a pressure lock (10).

3. The method of claim 1 **characterized in that** said mixture of process fluid and granules, once it has passed through said cooling zone (7), is then directed through a heat exchanger (17) where heat is recovered, and through said pressure lock (10) and from there into said separating means (8) having a temperature which is below the boiling temperature of the process fluid, which separating means (8) on the one hand discharges said granules and on the other hand returns the process fluid to the process chamber (1) via said heat exchanger (17).

4. The method of claim 3 **characterized in that** the energy is recovered by means of a heat pump.

5. The method of one of claims 1 to 4 **characterized in that** an underwater pelletizer is used as a cutting device.

## Revendications

1. Procédé de granulation de plastique avec température de fusion élevée de plus de 120 °C, par ex. du polycarbonate, un mélange de polycarbonate, du polystyrène, des matières thermoplastiques à haute température, avec une plaque perforée (2) pour l'obtention de cordons de plastique liquide ainsi qu'une chambre de traitement (1) contiguë contenant un fluide de traitement avec un dispositif de découpage (3) duquel est tiré un mélange de fluide de traitement et de granules lors du refroidissement des granules dans la section de refroidissement (7), **caractérisé en ce que** la chambre de traitement (1) est remplie d'un fluide de traitement avec une température de > 120 °C et une pression de > 2 bar et le mélange de fluide de traitement et de granules, maintenant la pression lors du passage dans la section de refroidissement (7), est ensuite acheminé à un dispositif de séparation (8) dans lequel le granulat est séparé et évacué après avoir préalablement passé par une écluse de décompression (10) en vue d'un abaissement à la pression ambiante du fluide de traitement.

2. Procédé de granulation de plastique avec température de fusion élevée de plus de 120 °C, par ex. du polycarbonate, un mélange de polycarbonate, du polystyrène, des matières thermoplastiques à haute température, avec une plaque perforée (2) pour l'obtention de cordons de plastique liquide ainsi qu'une chambre de traitement (1) contiguë contenant un fluide de traitement avec un dispositif de découpage (3) duquel est tiré un mélange de fluide de traitement et de granules lors du refroidissement des granules dans la section de refroidissement (7), **caractérisé en ce que** la chambre de traitement (1) est remplie d'un fluide de traitement avec une température de > 120 °C et une pression de > 2 bar et le mélange de fluide de traitement et de granules, maintenant la pression lors du passage dans la section de refroidissement (7), est séparé du fluide de traitement dans le dispositif de séparation (8) sous l'effet de la pression, après quoi les granules sont transportés par une écluse de décompression (10).

3. Procédé selon la revendication 1, **caractérisé en ce que** le mélange de fluide de traitement et de granules, après avoir passé dans la section de refroidissement (7) à travers un échangeur thermique (17) avec récupération de la chaleur, est acheminé via l'écluse de décompression (10) vers le dispositif de séparation (8) avec une température sous le point d'ébullition du fluide de traitement, d'où sont évacués les granules alors que le fluide de traitement est réacheminé à la chambre de traitement (1) via l'échangeur thermique (17).

4. Procédé selon la revendication 3, **caractérisée en ce que** la récupération d'énergie est réalisée par une pompe thermique.

5. Procédé selon l'une des revendications 1 à 4, **caractérisé en ce que** le dispositif de séparation utilisé est un granulateur immergé.
